# EUROPEAN PATENT APPLICATION

(11) **EP 4 254 920 A1**
(43) Date of publication of application: **04.10.2023**
(21) Application number: 21937101.0
(22) Date of filing: 15.12.2021
(51) Int. Cl.: H04M 1/72415, H04M 1/72469, B60W 50/14

(54) **ELECTRONIC DEVICE FOR VEHICLE, MOBILE DEVICE FOR CONTROLLING ELECTRONIC DEVICE FOR VEHICLE, AND METHOD FOR CONTROLLING ELECTRONIC DEVICE FOR VEHICLE BY USING MOBILE DEVICE**

(30) Priority: 13.04.2021 KR 20210048045
(71) Applicant: Samsung Electronics Co., Ltd., Suwon-si, Gyeonggi-do 16677 (KR)
(72) Inventor: KIM, Taejun, Suwon-si, Gyeonggi-do 16677 (KR); KANG, Mingyu, Suwon-si, Gyeonggi-do 16677 (KR); LEE, Woong, Suwon-si, Gyeonggi-do 16677 (KR); CHO, Walyong, Suwon-si, Gyeonggi-do 16677 (KR)
(74) Representative: Gulde & Partner
(86) International application number: PCT/KR2021/019102
(87) International publication number: WO 2022/220368

(57) **Abstract**

A mobile device, vehicular electronic device, method and medium thereof are disclosed. The mobile device includes a communicator, display, memory/medium, and processor. The processor implements one method, including: receive context information and driving state information from the vehicular device, generate a control interface based on the received information, and output the control interface. The vehicular control device includes a communicator, memory/medium, and processor, which transmits the context information and drive state information to the mobile device, receives input information generated through the control interface as transmitted by the mobile device, and executes a corresponding control operation based on the input information.

## Description

### TECHNICAL FIELD

The disclosure relates to a vehicular electronic device, a mobile device for controlling the vehicular electronic device, and a method of controlling the vehicular electronic device by using the mobile device. More particularly, the disclosure relates to a vehicular electronic device, a mobile device for controlling the vehicular electronic device, and a method of controlling the vehicular electronic device by using a control interface provided on the mobile device.

### BACKGROUND ART

A variety of functions have been developed and applied to address the needs and increase the convenience of vehicle users. For example, a vehicular electronic device may provide functionality incorporating usage of applications installed in a mobile device (e.g., a smartphone) by connection of the mobile device to the vehicular electronic device, so that a mobile device user may seamlessly continue operation of the applications in a vehicular environment. However, although mobile device functions may thus operate in the vehicle environment, the mobile device itself may be incapable of controlling functions of the vehicular electronic device.

In addition, the mobile device may provide functionality enabling control of some functions of the vehicular electronic device via interoperation with the vehicular electronic device. However, in order to utilize the control function, a user may enter a control mode corresponding to a context of the vehicular electronic device. Oftentimes, the desired function is restricted against operation while the vehicle is moving, as the driver's attention or gaze may be dangerously distracted.

### DESCRIPTION OF EMBODIMENTS

### TECHNICAL SOLUTION TO PROBLEM

Provided is a vehicular electronic device that includes a control interface that increase interoperability with a paired mobile device, providing more convenience to users. In addition, provided is a vehicular electronic device that performs a control operation based on a control input received through a control interface output on a mobile device. Specifically, provided is a vehicular electronic device that transmits at least one of context information of the vehicular electronic device, driving state information of a vehicle, or condition information of a driver to a communicatively connected mobile device, and performs a control operation based on a control input received to the mobile device.

In addition, provided is a mobile device that outputs a control interface that increases interoperability with a vehicular electronic device. Specifically, provided is a mobile device that may generate a control interface according to an operative context of a vehicular electronic device, based on context information of the vehicular electronic device.

In addition, provided is a mobile device that generates and outputs an appropriate control interface, based on driving state information of a vehicle or condition information of a vehicle driver.

### ADVANTAGEOUS EFFECTS OF DISCLOSURE

A mobile device, according to an embodiment of the disclosure, may automatically generate and output an appropriate control interface for interoperation with a vehicular electronic device, based on at least one of context information of a vehicular electronic device, driving state information of the vehicle, or condition information of a driver, such that a driver may more conveniently control the vehicular electronic device through the mobile device.

In addition, the method may provide a control environment according to a driving situation or a condition of the driver, which may reduce distractions and hinderances to driver attention, thereby increasing the safety of vehicle operation while utilizing certain vehicular-related functions. Accordingly, driver safety may be improved while likewise increasing user convenience.

### BRIEF DESCRIPTION OF DRAWINGS

FIG. 1 is a diagram illustrating a vehicular electronic device and a mobile device for controlling the vehicular electronic device according to an embodiment of the disclosure.
FIG. 2 is a flowchart illustrating a method of controlling a vehicular electronic device by using a mobile device, according to an embodiment of the disclosure.
FIGS. 3A, 3B and 3C are reference diagrams illustrating a method, performed by a mobile device according to an embodiment of the disclosure, of determining a control interface, based on context information of a vehicular electronic device.
FIG. 4 is a flowchart illustrating a method of controlling a vehicular electronic device by using a mobile device, according to an embodiment of the disclosure.
FIG. 5 is a block diagram illustrating a configuration of a vehicular electronic device according to an embodiment of the disclosure.
FIG. 6 is a block diagram illustrating a configuration of a mobile device according to an embodiment of the disclosure.
FIGS. 7A, 7B and 7C are reference diagrams illustrating a method, performed by a mobile device according to an embodiment of the disclosure, of determining a control interface, based on context information of a vehicular electronic device and driving state information of a vehicle.
FIG. 8 is a flowchart illustrating a method of controlling a vehicular electronic device by using a mobile device, according to an embodiment of the disclosure.
FIGS. 9A and 9B are reference diagrams illustrating a method, performed by a mobile device according to an embodiment of the disclosure, of determining a control interface, based on context information of a vehicular electronic device and condition information of a driver.
FIG. 10 is a block diagram illustrating a configuration of a vehicular electronic device according to another embodiment of the disclosure.
FIG. 11 is a block diagram illustrating a configuration of a mobile device according to another embodiment of the disclosure.
FIG. 12 is a diagram illustrating an operation performed using an artificial intelligence (AI) technology, according to an embodiment of the disclosure.
FIG. 13 is a diagram illustrating vehicular electronic devices according to an embodiment of the disclosure operating with a server.
FIG. 14 is a diagram illustrating in detail FIG. 13.
FIG. 15 is a diagram illustrating a mobile device according to an embodiment of the disclosure operating with a server.

### BEST MODE

According to an embodiment of the disclosure, a mobile device for controlling a vehicular electronic device is disclosed, the mobile device including: a communicator configured to communicate with the vehicular electronic device; a display; a memory storing one or more instructions; and a processor configured to execute the one or more instructions stored in the memory, to cause the mobile device to: control the communicator to receive context information of the vehicular electronic device and driving state information of a vehicle from the vehicular electronic device, generate a control interface for controlling the vehicular electronic device, based on the received context information of the vehicular electronic device and the received driving state information of the vehicle, and control the display to output the control interface.

The context information of the vehicular electronic device may include at least one of information on a function executed in the vehicular electronic device, or information on a control function available within the executed function, and the driving state information of the vehicle may include at least one of information on whether the vehicle is in motion or information about a present speed of the vehicle.

The processor may further: based on the received context information, select one or more control functions for which inputs are receivable, such that at least some of the selected one or more control functions are included in the generated control interface.

The processor may further: generate a first control interface when the vehicle is stopped, and generating a second control interface when the vehicle is in motion, such that a count of control functions included in the second control interface is less than a count of control functions included in the first control interface.

The mobile device may further include input/output circuitry configured to receive a user input with respect to the control interface as input information, such that the input information is transmitted to the vehicular electronic device through the communicator.

The processor may receive condition information on a driver operating the vehicle from the vehicular electronic device, such that the control interface is generated based at least in part on the received condition information of the driver.

The processor may further generate a first control interface when the condition information indicates a normal condition, generate a second control interface when the condition information indicates an abnormal condition, wherein a count of control functions included in the second control interface is less than a count of control functions included in the first control interface.

The processor may output at least one of a warning sound, a vibration, or a notification message, based on the condition information of the driver.

According to an embodiment of the disclosure, a vehicular electronic device is disclosed, including a communicator configured to communicate with a mobile device, a memory storing one or more instructions, and a processor. The processor executes the instructions to cause the vehicular electronic device to: control the communicator to transmit context information related to a function executed in the vehicular electronic device, and driving state information of a vehicle to the mobile device, receive a user input through a control interface as input information, the control interface generated by the mobile device based on the context information and the driving state information of the vehicle, and execute a control operation based on the input information.

The vehicular electronic device may further include a display such that one or more instructions are executable by the processor to: control the display to output an interface screen corresponding to the executed function, and update the interface screen as the control operation is executed.

The processor may further: receive information related to operation of the vehicle from a vehicle sensor of the vehicle, and obtain driving state information of the vehicle, based on the information related to the operation of the vehicle.

The processor may further: obtain condition information of a driver operating the vehicle, and control the communicator to transmit the condition information to the mobile device.

According to an embodiment of the disclosure, a method of controlling a vehicular electronic device, using a mobile device is disclosed, the method including: receiving, via a communicator circuitry, context information of the vehicular electronic device and driving state information of a vehicle from the vehicular electronic device, generating, by a processor, a control interface for controlling the vehicular electronic device, based on the received context information of the vehicular electronic device and the driving state information of the vehicle, and outputting the generated control interface on a display.

### MODE OF DISCLOSURE

Throughout the disclosure, the expression "at least one of a, b or c" indicates only a, only b, only c, both a and b, both a and c, both b and c, all of a, b, and c, or variations thereof.

The terms used herein will be briefly described, and the disclosure will be described in detail.

The terms used herein are those general terms currently widely used in the art in consideration of functions in the disclosure but the terms may vary according to the intention of one of ordinary skill in the art, precedents, or new technology in the art. Also, some of the terms used herein may be arbitrarily chosen by the present applicant, and in this case, these terms are defined in detail below. Accordingly, the specific terms used herein should be defined based on the unique meanings thereof and the whole context of the disclosure.

It will be understood that when a certain part "includes" a certain component, the part does not exclude another component but may further include another component, unless the context clearly dictates otherwise. Also, the term such as "unit" or "module" used herein refers to a unit that performs at least one function or operation, and the unit may be implemented as hardware or software or as a combination of hardware and software.

Also, the expression "at least one of A, B or C" may mean any one of 'A', 'B', 'C', 'A and B', 'A and C', 'B and C', or 'A, B, and C'.

The disclosure will now be described more fully with reference to the accompanying drawings for one of ordinary skill in the art to be able to perform the disclosure without any difficulty. However, the disclosure may be embodied in many different forms and is not limited to the embodiments of the disclosure set forth herein. For clarity, portions irrelevant to the descriptions of the disclosure are omitted in the drawings, and like components are denoted by like reference numerals throughout the specification.

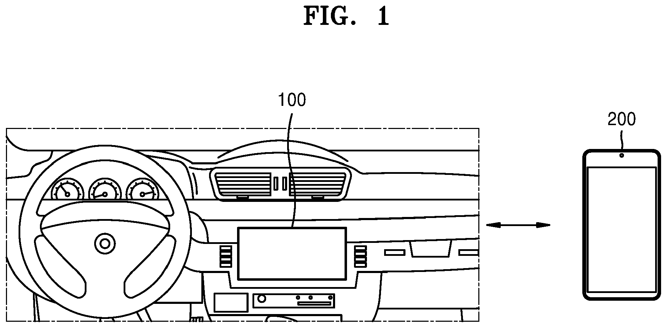

FIG. 1 is a diagram illustrating a vehicular electronic device 100 and a mobile device 200 for controlling the vehicular electronic device 100 according to an embodiment of the disclosure.

Referring to FIG. 1, the vehicular electronic device 100 refers to an electronic device mounted, disposed, or included in a vehicle, and may be an electronic device for implementing in-vehicle infotainment (IVI) technology. Infotainment is a term indicative of a combination of information, such as vehicle operation, navigation, and entertainment, which refers to various entertainments and human-friendly functions, and indicates both information and entertainment. That is, an infotainment system may refer to a system that allows a vehicle user to use information as enjoyable and convenient as entertainment.

In particular, an IVI system refers to a system that displays a variety of information that may be provided by a vehicle, such as radio, audio, video, navigation, voice commands, automatic safety diagnosis, etc. heard in the vehicle, so that a user (a driver and/or a passenger) may easily and conveniently recognize or use the information. Accordingly, the infotainment system has been developed and advanced in the direction of increasing user convenience.

Referring to FIG. 1, the vehicular electronic device 100 may include an electronic device implementing the infotainment system, and may provide functions such as navigation, audio, video, radio, etc. within the vehicle.

Also, the mobile device 200 according to an embodiment of the disclosure refers to a portable electronic device capable of controlling the vehicular electronic device 100, via execution of communication with the vehicular electronic device 100. Specifically, the mobile device 200 may include a mobile computing device such as a wearable device, a smart phone, a tablet PC, a PDA, etc. However, the mobile device 200 is not limited thereto.

The vehicular electronic device 100 and the mobile device 200 according to an embodiment of the disclosure may be communicatively connected to each other. For example, the vehicular electronic device 100 and the mobile device 200 may be "paired" in accordance with a certain communication standard. When the vehicular electronic device 100 and the mobile device 200 initiate connection through a communication network according to, e.g., the Bluetooth communication standard, the vehicular electronic device 100 and the mobile device 200 may establish a communication connection by pairing with one another according to the Bluetooth communication standard, and exchange data utilized for completing a Bluetooth communication connection.

Alternatively, when the vehicular electronic device 100 and the mobile device 200 are connected through an Internet of Things (IoT) platform, the vehicular electronic device 100 and the mobile device 200 may perform communication connection with each other according to regulations of a communication network for forming the IoT platform.

Alternatively, when the vehicular electronic device 100 and the mobile device 200 are connected through a Bluetooth low energy (BLE) communication network, the vehicular electronic device 100 and the mobile device 200 may perform communication connection with each other, by executing a pairing operation according to the BLE communication standard and exchanging data utilized for a BLE communication connection.

In addition, the vehicular electronic device 100 may actively request a communication connection to the mobile device 200 to perform a communication connection operation, or the mobile device 200 may actively request the communication connection to the vehicular electronic device 100 to perform the communication connection operation. Also, when the communication connection between the vehicular electronic device 100 and the mobile device 200 is completed, the vehicular electronic device 100 and the mobile device 200 may be registered with each other.

When the communication connection between the vehicular electronic device 100 and the mobile device 200 according to an embodiment of the disclosure is completed, the vehicular electronic device 100 may transmit the obtained context information, driving state information of the vehicle, condition information of the driver, etc. to the mobile device 200. The mobile device 200 may generate a control interface, based on the received context information, driving state information of the vehicle, condition information of the driver, etc. and output the generated control interface to a display screen to provide the control interface to the user. Accordingly, the user may control a function of the vehicular electronic device 100, by using the control interface output to the mobile device 200. This will be described in detail with reference to the drawings below.

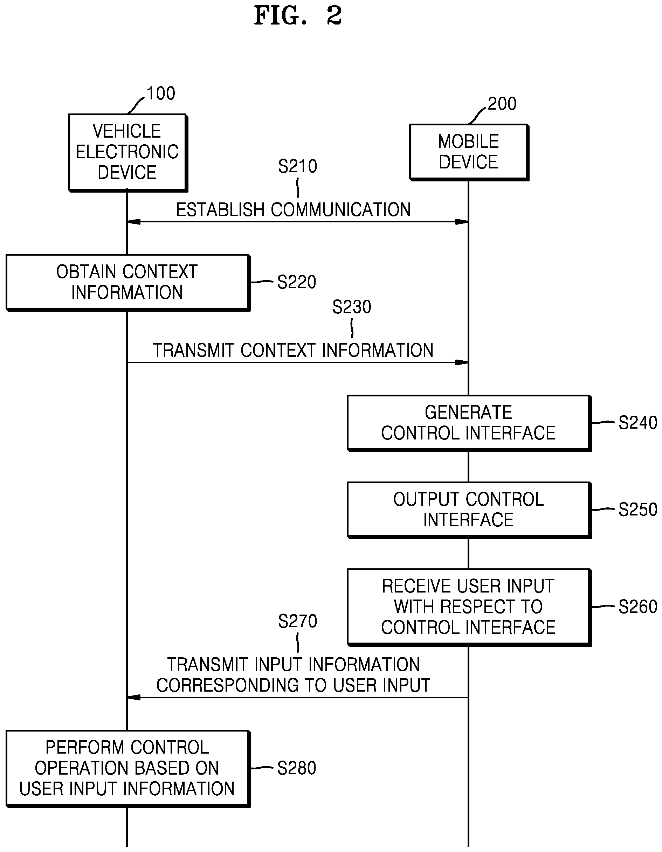

FIG. 2 is a flowchart illustrating a method of controlling the vehicular electronic device 100, by using the mobile device 200 according to an embodiment of the disclosure.

Referring to FIG. 2, the vehicular electronic device 100 and the mobile device 200 according to an embodiment of the disclosure may be communicatively connected to each other in operation S210. This has been described in detail with reference to FIG. 1, and thus a detailed description thereof is omitted.

The vehicular electronic device 100 according to an embodiment of the disclosure may obtain context information in operation S220.

In this case, the context information may indicative a function being executed in the vehicular electronic device 100. Also, when a plurality of functions are executed in the vehicular electronic device 100, the context information may include information about an executed function present in the uppermost computing layer (e.g., a foreground application, rather than a background application). In addition, the context information may indicate a control function available in the executed function.

For example, when an audio player function is executed in the vehicular electronic device 100, the context information may indicate that the 'audio player' function is executing, and further indicate a control function (e.g., play/pause, play previous song, play next song, on/off, volume control, etc.) which is available for selection/execution within the audio player.

The vehicular electronic device 100 may transmit the context information of the vehicular electronic device 100 to the mobile device 200 through the communication network in operation S230. In this regard, the context information may be transmitted, using a short-range communication network. In this regard, the short-range communication network may be a communication network according to a communication standard such as Bluetooth, Wi-Fi, BLE, etc.

The mobile device 200 according to an embodiment of the disclosure may generate the control interface, based on the context information received from the vehicular electronic device 100 in operation S240. For example, the mobile device 200 may generate an audio control interface, based on the received context information.

In operation S250, the mobile device 200 according to an embodiment of the disclosure may output the control interface generated in operation S240. For example, the mobile device 200 may output the generated audio control interface to a display. The audio control interface may include control functions such as play/pause, play previous song, play next song, on/off, volume control, etc. An audio control interface screen may include interactable objects corresponding to the respective control functions such as play/pause, play previous song, play next song, on/off, volume control, etc.

Accordingly, the mobile device 200 may receive a user input for controlling the vehicular electronic device 100 through the control interface output to the display in operation S260. For example, the mobile device 200 may receive a touch input for pressing a play next song object included in the audio control interface screen.

The mobile device 200 may transmit input information corresponding to the received user input to the vehicular electronic device 100 in operation S270. For example, the mobile device 200 may transmit input information indicating 'play next song to the vehicular electronic device 100.

The vehicular electronic device 100 may perform a control operation, based on the input information received from the mobile device 200 in operation S280. For example, the vehicular electronic device 100 may play the next song, based on the input information indicating 'play next song', and update an interface screen output to the vehicular electronic device 100 to a corresponding screen (e.g., displaying an image representative of the requested song) for output the updated screen.

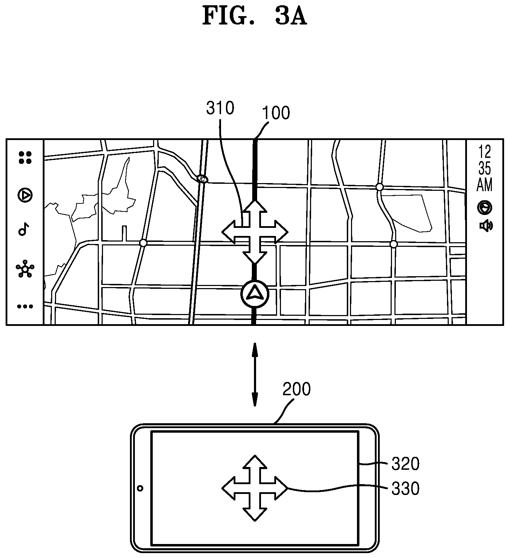

FIGS. 3A to 3C are reference diagrams illustrating a method, performed by the mobile device 200 according to an embodiment of the disclosure, of determining a control interface, based on context information of the vehicular electronic device 100.

Referring to FIG. 3A, the vehicular electronic device 100 according to an embodiment of the disclosure may execute a navigation function. The vehicular electronic device 100 may output a navigation screen to a display. The navigation screen may include a first object indicating a current location of a vehicle as displayed on a map representing a local geographic area. Also, the navigation screen may include a second object 310, and change a region displayed on the map, via inputs to the second object 310. For example, when the second object 310 moves on the map, the navigation screen may display a region of a preset range on the display, with respect to a position of the moved second object 310. Also, the navigation screen may execute zoom functions on the map, using a zoom-in and zoom-out function. In addition, the navigation screen may include various functions such as a destination setting function, a waypoint setting function, a rerouting function, a terminate-navigation function, etc.

The vehicular electronic device 100 may transmit information indicating that the executed function is a navigation function, and information identifying control functions available on the current navigation screen, to the mobile device 200 as the context information.

The mobile device 200 according to an embodiment of the disclosure may generate a navigation control interface 320, based on the received context information, and output the navigation control interface 320 to the display of the mobile device 200. In this case, the navigation control interface 320 may include some or all of the same control functions available on the navigation screen.

For example, the navigation control interface 320 may include a third object 330 corresponding to the second object 310 displayed on the vehicular electronic device 100, and may include a screen zoom-in/zoom-out function. In addition, the navigation control interface 320 may include various functions such as a destination setting function, a waypoint setting function, a rerouting function, a terminate-navigation function, etc.

Accordingly, the user may perform a navigation control input, by using the navigation control interface 320 provided by the mobile device 200. For example, the user may change a map region displayed on the vehicular electronic device 100, by moving the third object 330. Also, the user may zoom-in or zoom-out the map screen displayed on the vehicular electronic device 100 using a pinch-in or pinch-out input, by touching the navigation control interface 320 with two fingers.

In addition, the user may use speech to input a destination, set a waypoint, etc. to the mobile device 200, and accordingly, the vehicular electronic device 100 may set the destination or the waypoint based on speech input to the mobile device 200. However, the disclosure is not limited thereto.

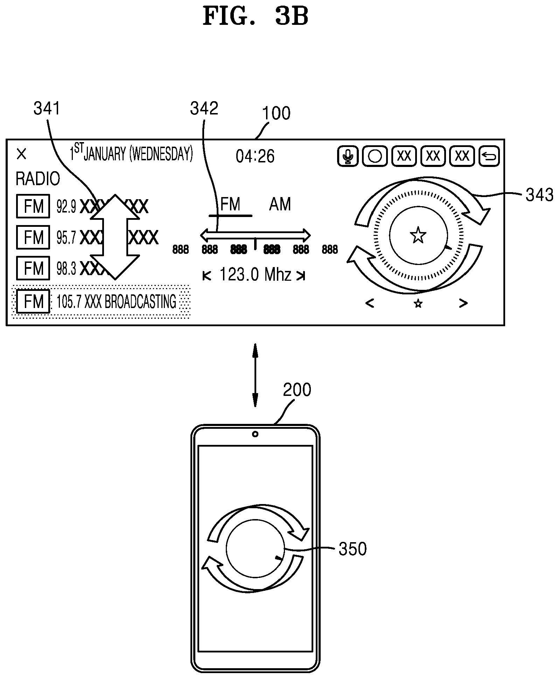

Referring to FIG. 3B, the vehicular electronic device 100 according to an embodiment of the disclosure may display a screen utilizing an up/down control input 341, a left/right control input 342, or a rotation control input 343. For example, the screen displayed on the vehicular electronic device 100 may include a list in which a plurality of selectable items are arranged up/down, left/right, or in a circle.

The vehicular electronic device 100 may transmit information that the screen currently being displayed is a screen utilizing the up/down control input 341, the left/right control input 342, or the rotation control input 343, to the mobile device 200 as the context information.

The mobile device 200 according to an embodiment of the disclosure may generate the control interface as a direction control interface, based on the received context information, and may output the direction control interface to the display. In this regard, the direction control interface may include a wheel key 350. Accordingly, when the user performs an input of rotating the wheel key 350 provided by the mobile device 200 clockwise, the user may move a cursor or a focus selecting an item from the list displayed on the vehicular electronic device 100 downward, right, or clockwise. Alternatively, when the user performs an input of rotating the wheel key 350 provided by the mobile device 200 counterclockwise, the user may move the cursor or the focus selecting the item from the list displayed on the vehicular electronic device 100 upward, left or counterclockwise. However, the disclosure is not limited thereto.

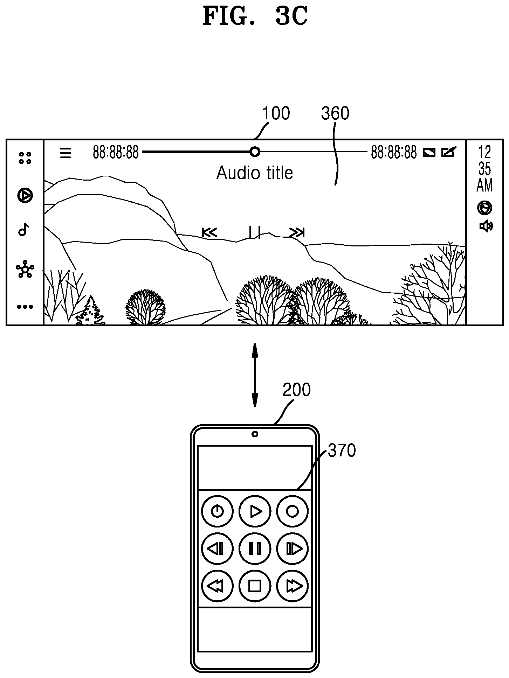

In addition, FIG. 3 illustrate that the direction control interface includes the wheel key 350, but the disclosure is not limited thereto, and the direction control interface may include various types of input means such as two direction keys (buttons), four direction keys (buttons), scroll up and down keys, scroll left and right keys, etc.

Referring to FIG. 3C, the vehicular electronic device 100 according to an embodiment of the disclosure may execute an audio player function. The vehicular electronic device 100 may output an audio player screen 360 to the display. The audio player screen 360 may include information on a currently playing media file (e.g., title, artist, genre, etc.), and objects selectable to execute control functions (e.g., play previous song, play next song, play/pause, volume control, etc.) available on the audio player screen 360.

The vehicular electronic device 100 may transmit information that the function being executed is the audio player function and information about the control functions available on the current audio player screen 360, to the mobile device 200 as the context information.

The mobile device 200 according to an embodiment of the disclosure may generate an audio control interface 370, based on the received context information, and output the audio control interface 370 to the display. In this regard, the audio control interface 370 may include the control functions available on the audio player screen 360.

For example, the audio control interface 370 may include the objects representing play previous song, play next song, play/pause, volume control, etc.

Accordingly, the mobile device 200 may receive an audio player control input through the audio control interface 370 provided by the mobile device 200. For example, the mobile device 200 may receive a touch input selecting a play next song object included in the generated audio control interface 370. The mobile device 200 may transmit input information corresponding to the play next song command to the vehicular electronic device 100, and the vehicular electronic device 100 may initiate playback of the next song, based on the received input information.

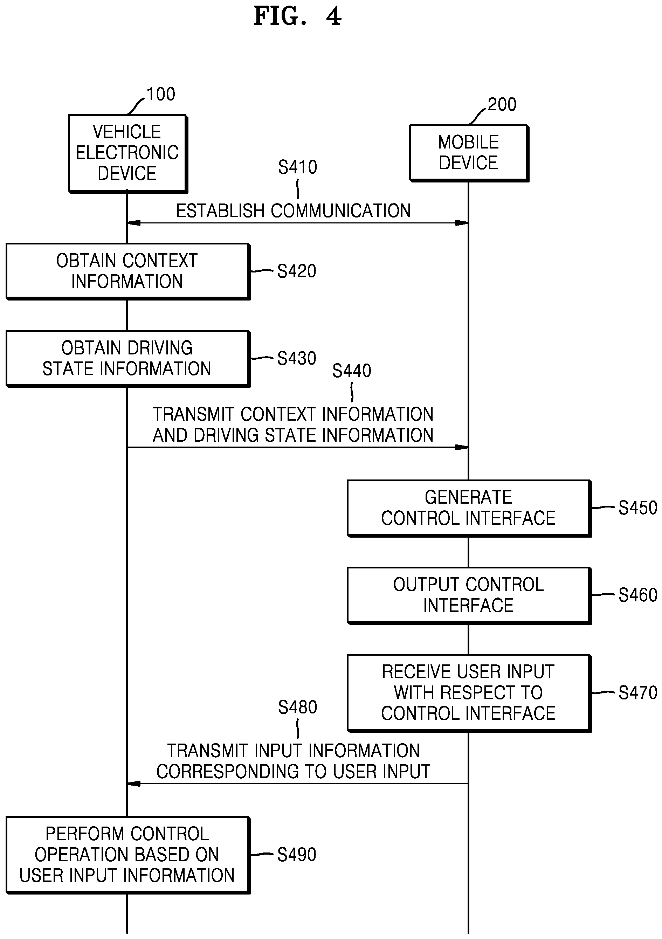

FIG. 4 is a flowchart illustrating a method of controlling the vehicular electronic device 100, by using the mobile device 200 according to an embodiment of the disclosure.

Referring to FIG. 4, the vehicular electronic device 100 and the mobile device 200 according to an embodiment of the disclosure may be communicatively connected to each other in operation S410. This has been described in detail with reference to FIG. 1, and thus a detailed description thereof is omitted.

The vehicular electronic device 100 according to an embodiment of the disclosure may obtain context information in operation S420, and obtain driving state information in operation S430. Operation S420 of obtaining the context information has been described with reference to operation S220 of FIG. 2, and thus a detailed description thereof is omitted.

The driving state information of the vehicle may include information about whether the vehicle on which the vehicular electronic device 100 is mounted or disposed is being operated (whether the vehicle is in motion or stopped), and, when the vehicle is moving, speed information (e.g., an actual velocity, and/or information indicating whether the speed falls within predefined speed ranges indicated as or high speed, medium speed, or low speed).

The vehicular electronic device 100 may obtain the driving state information of the vehicle, based on information (e.g., present speed, steering angle, pedal activation, gear selection, turn signal activation, directionality of an activated turn signal, etc.) related to driving of the vehicle received from a vehicle sensor module of the vehicle.

The vehicular electronic device 100 may transmit the context information of the vehicular electronic device 100 and the driving state information of the vehicle to the mobile device 200 through a communication network (S440).

The mobile device 200 according to an embodiment of the disclosure may generate a control interface, based on the context information and the driving state information of the vehicle received from the vehicular electronic device 100 in operation S450.

For example, the mobile device 200 may determine the control interface to be an audio control interface, based on the received context information. Also, the mobile device 200 may generate any one of a plurality of audio control interfaces, based on the received driving state information. For example, when the driving state information of the vehicle indicates that the vehicle is stopped, the mobile device 200 may generate a first audio control interface including the control functions such as play/pause, play previous song, play next song, on/off, volume control, etc. Also, when the driving state information of the vehicle indicates that the vehicle is moving within a predefined range associated with "high" speed, the mobile device 200 may generate a second audio control interface including some of audio control functions included in the first audio control interface (e.g., but less than an entirety thereof). However, the disclosure is not limited thereto.

The mobile device 200 according to an embodiment of the disclosure may output an interface corresponding to the determined control interface to the display in operation S460. For example, the mobile device 200 may output a generated audio control interface screen between the first audio control interface and the second audio control interface to the display.

Accordingly, the mobile device 200 may receive a user input controlling the vehicular electronic device 100, through the audio control interface output to the display of the mobile device 200 in operation S470.

The mobile device 200 may transmit input information corresponding to the received user input to the vehicular electronic device 100 in operation S480.

The vehicular electronic device 100 may perform a control operation, based on the input information received from the mobile device 200 in operation S490.

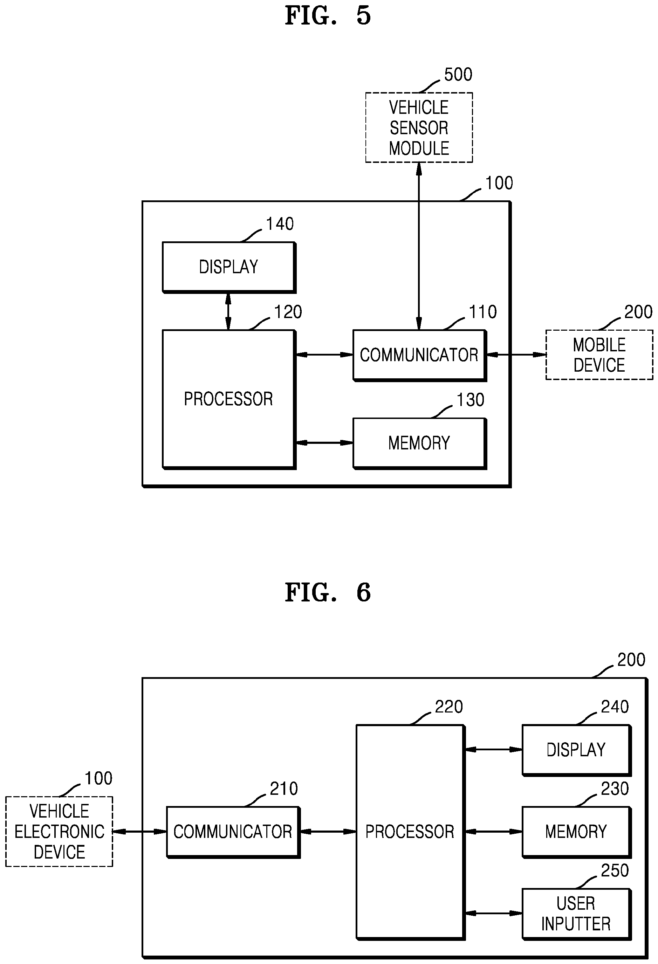

FIG. 5 is a block diagram illustrating a configuration of the vehicular electronic device 100 according to an embodiment of the disclosure.

Referring to FIG. 5, the vehicular electronic device 100 according to an embodiment of the disclosure may include a communicator 110, a processor 120, a memory 130, and a display 140.

The communicator 110 may communicate with an external device or a server through at least one wired or wireless communication network. The communicator 110 according to an embodiment of the disclosure may include at least one short-range communication module (not shown) performing communication according to the communication standard, such as Bluetooth, Wi-Fi, BLE, NFC/RFID, Wi-Fi direct, UWB, Zigbee, etc. and a long-range communication module (not shown) performing communication with a server (not shown) supporting long-range communication according to the long-range communication standard. The long-range communication module (not shown) may perform communication through a communication network conforming to the 3G, 4G, and/or 5G communication standards or a network for Internet communication. The communicator 110 according to an embodiment of the disclosure may communicate with the mobile device 200 through a short-range communication method. However, the communicator 110 is not limited thereto.

Also, the communicator 110 may perform data communication with a vehicle sensor module 500 mounted in the vehicle. For example, the communicator 110 may communicate with the vehicle sensor module 500 according to a controller area network (CAN).

The vehicle sensor module 500 may be mounted on the vehicle, detect changes in a speed of the vehicle, steering angle, pedal activation, gear selection, a turn signal activation, etc., obtain information related to operation of the vehicle, and transmit the information related to driving to the vehicular electronic device 100. Accordingly, the communicator 110 may receive at least one of driving speed sensing information, steering angle information of the vehicle, pedal sensing information, gear lever sensing information, information about whether the turn signal is activated, or a directionality of the activated turn signal, etc. from the vehicle sensor module 500, by performing CAN communication with the vehicle sensor module 500.

The processor 120 may generally control operations of the vehicular electronic device 100. The processor 120 may execute one or more programs stored in the memory 130. The memory 130 according to an embodiment of the disclosure may store a variety of data, program, or application for driving and controlling the vehicular electronic device 100.

The processor 120 may include hardware components that perform arithmetic, logic, and input/output operations and signal processing. The processor 120 may include at least one of a central processing unit (CPU), a microprocessor, a graphics processing unit (GPU), application specific integrated circuits (ASICs), digital signal processors (DSPs), digital signal processing devices (DSPDs), programmable logic devices (PLDs), or field programmable gate arrays (FPGAs), but is not limited thereto.

The memory 130 may include, for example, non-volatile memory including at least one of memory of a flash memory type, a hard disk type, a multimedia card micro type, or a card type (e.g., secure digital (SD) memory, extreme digital (XD) memory, etc.), read-only memory (ROM), electrically erasable programmable read-only memory (EEPROM), or programmable read-only memory (PROM) and volatile memory such as random-access memory (RAM) or static random-access memory (SRAM).

The memory 130 may store instructions readable by the processor 120, a data structure, and program code. In the following embodiment of the disclosure, the processor 120 may be implemented by executing instructions or code of a program stored in the memory 130.

The processor 120 may monitor context information of the vehicular electronic device 100 and control the communicator 110 to transmit the context information to the mobile device 200. In this regard, the context information may include information about a function being executed in the vehicular electronic device 100, and when a plurality of functions are being executed, information about a function being executed in the uppermost layer (e.g., foreground). In addition, the context information may include information about control functions available in the corresponding function.

Also, the processor 120 may obtain driving state information of the vehicle. For example, the processor 120 may obtain information about whether the vehicle is moving, whether the vehicle is stopped, when the vehicle is moving, information about a present speed, and whether the vehicle is not in a dangerous or emergency situation, based on at least one of the driving speed sensing information, the steering angle information of the vehicle, the pedal sensing information, the gear lever sensing information, the information about whether the turn indicator is activated, or the direction of the activated turn indicator, etc. received from the vehicle sensor module 500. The processor 120 may control the communicator 110 to transmit the obtained driving state information of the vehicle to the mobile device 200.

In addition, the processor 120 may control the communicator 110 to obtain information about a current time of the vehicular electronic device 100, map the information to the context information or the driving state information, and transmit the information to the mobile device 200.

Also, upon receiving input information from the mobile device 200, the processor 120 may interpret the input information and perform a control operation corresponding to the input information.

The display 140 according to an embodiment of the disclosure may output an image on a screen. Specifically, the display 140 may output the image corresponding to video data through a display panel (not shown) included therein, so that a user may visually recognize the video data. Here, the screen that is output by the display 140 may include a user interface screen.

Specifically, the display 140 may further include a touch screen (not shown) combined with the display panel (not shown). When the display 140 includes the display panel combined with the touch screen, the display 140 may output a user interface screen that is capable of receiving a touch input. Also, when an input(e.g., a touch) of the user corresponding to a command is detected through the user interface screen, the display 140 may transmit a detected touch input to the processor 120. Then, the processor 120 may interpret the detected touch input, recognize and execute the command corresponding to the input of the user.

The display 140 according to an embodiment of the disclosure may output an interface screen corresponding to a function executed in the vehicular electronic device 100. In addition, when receiving the input information from the mobile device 200, the processor 120 may perform a control operation, in the same manner as when receiving the user input (e.g., a touch) through the interface screen output to the display 140.

Also, when performing the control operation based on the input information received from the mobile device 200, the processor 120 may update the display of the interface screen.

FIG. 6 is a block diagram illustrating a configuration of the mobile device 200 according to an embodiment of the disclosure.

Referring to FIG. 6, the mobile device 200 according to an embodiment of the disclosure may include a communicator 210 (e.g., communication circuitry), a processor 220, a memory 230, a display 240, and a user inputter 250 (e.g., input and/or output circuitry).

For example, the communicator 210 may include a short-range communicator, a mobile communicator, etc., in correspondence to performance and structure of the mobile device 200.

The short-range communicator may include a Bluetooth communicator, a BLE communicator, a near-field communicator, a WLAN (Wi-Fi) communicator, a Zigbee communicator, an infrared data association (IrDA) communicator, a Wi-Fi direct (WFD) communicator, a UWB communicator, an Ant+ communicator, a microwave (uWave) communicator, etc., but is not limited thereto.

The mobile communicator may transceive wireless signals with at least one of a base station, an external terminal, or a server, through a mobile communication network. Here, the wireless signals may include a sound call signal, a video call signal, or various types of data according to trasceiving of text/multimedia messages.

The communicator 210 according to an embodiment of the disclosure may communicate with the vehicular electronic device 100 to receive context information and driving state information of the vehicle from the vehicular electronic device 100. Also, the communicator 210 may receive time information mapped to the context information and the driving state information of the vehicle together.

The processor 220 according to an embodiment of the disclosure may generally control operations of the mobile device 200. Also, the processor 220 may control other components included in the mobile device 200 to perform a certain operation. The processor 220 according to an embodiment of the disclosure may execute one or more programs stored in the memory 230. The processor 220 may include a single core, a dual core, a triple core, a quad core, and multiple cores. Also, the processor 220 may include a plurality of processors.

The memory 230 according to an embodiment of the disclosure may store a variety of data, program, or application for driving and controlling the mobile device 200.

Also, the program stored in the memory 230 may include one or more instructions. The program (one or more instructions) or the application stored in the memory 230 may be executed by the processor 220.

The processor 220 according to an embodiment of the disclosure may generate a control interface, based on the context information and the driving state information of the vehicle received from the vehicular electronic device 100. The processor 220 may obtain information about a function executed in the vehicular electronic device 100, based on the context information, and obtain information about a control function available in the corresponding function. For example, when recognizing that the function being executed in the vehicular electronic device 100 is an audio player, based on the context information, the processor 220 may generate the control interface as an audio control interface for controlling the audio player. Also, the processor 220 may select one of a plurality of audio control interfaces, based on the driving state information. For example, when recognizing that the vehicle is stopped, the processor 220 may select a first audio control interface including control functions such as play/pause, play previous song, play next song, on/off, volume control, etc., and, when recognizing that the vehicle is driving at high speed, may select a second audio control interface including some of audio control functions included in the first audio control interface. However, the disclosure is not limited thereto.

The memory 230 may include at least one type of storage medium from a flash memory-type storage medium, a hard disk-type storage medium, a multimedia card micro-type storage medium, a card- type memory (for example, SD or XD memory), RAM, static RAM (SRAM), ROM, electrically erasable-programmable ROM (EEPROM), programmable ROM (PROM), a magnetic memory, a magnetic disk, and an optical disk.

The display 240 may convert an image signal, a data signal, an OSD signal, a control signal, etc. processed by the processor 120 to generate driving signals. The display 240 may be implemented as a PDP, a liquid crystal display (LCD), an organic light-emitting display (OLED), a flexible display, etc., and may also be implemented as a three-dimensional (3D) display. Also, the display 240 may be configured as a touch screen and used as an input device in addition to an output device. The display 240 according to an embodiment of the disclosure may output the generated control interface.

The user inputter 250 (e.g., input circuitry) refers to means by which the user inputs data for controlling the mobile device 200. For example, the user inputter 250 may include a key pad, a dome switch, a touch pad (a touch capacitance method, a pressure-resistive layer method, an infrared sensing method, a surface ultrasonic conductive method, an integral tension measuring method, a piezo effect method, etc.), a jog wheel, a jog switch, etc., but is not limited thereto.

Also, the user inputter 250 may include a speech recognition device (not shown) for speech recognition. For example, the speech recognition device may include a microphone, and receive a user's voice command or a speech request. Also, the user inputter 250 may include a motion sensor (not shown). For example, the motion sensor (not shown) may sense a user's motion in a vehicle and receive the sensed motion as a user input. Also, the speech recognition device and the motion sensor described above may not be included in the user inputter 250 but may be included in the mobile device 200 as modules independent from the user inputter 250.

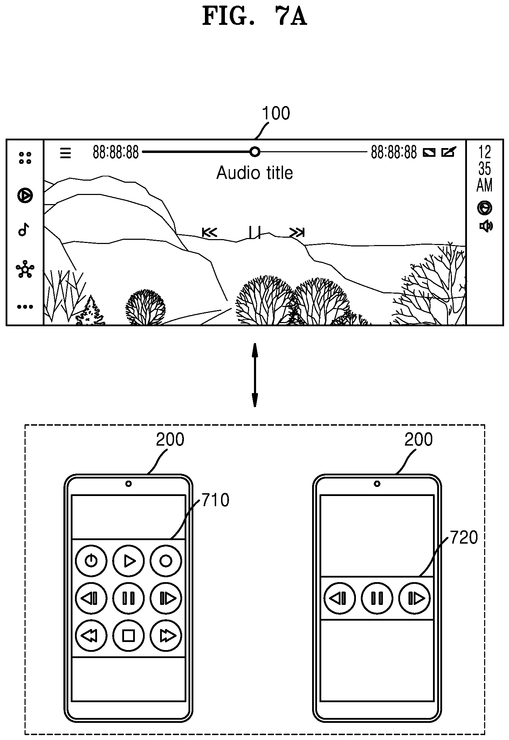

FIGS. 7A to 7C are reference diagrams illustrating a method, performed by the mobile device 200 according to an embodiment of the disclosure, of determining a control interface, based on context information of the vehicular electronic device 100 and driving state information of a vehicle.

Referring to FIG. 7A, the vehicular electronic device 100 according to an embodiment of the disclosure may execute an audio player function. The vehicular electronic device 100 may output an audio player screen to a display. The audio player screen may include information about currently playing music (e.g., title, artist, genre, etc.) and objects representing control functions (e.g., play previous song, play next song, play/pause, volume control, etc.) available on the audio player screen.

The vehicular electronic device 100 may transmit information that a function being executed is the audio player function and information about the control functions available on the current audio player screen, to the mobile device 200 as the context information.

The mobile device 200 according to an embodiment of the disclosure may generate an audio control interface, based on the received context information, and output the audio control interface to the display. In this regard, the mobile device 200 may output one of a plurality of audio control interfaces, based on the driving state information of the vehicle. For example, when the driving state information of the vehicle indicates that the vehicle is stopped, the mobile device 200 may output a first audio control interface 710 including the control functions such as play/pause, play previous song, play next song, on/off, volume control, etc. to the display. Meanwhile, when the driving state information of the vehicle indicates that the vehicle is moving at a high speed, the mobile device 200 may output a second audio control interface 720 including some (e.g., play/pause, play previous song, and play next song) of audio control functions included in the first audio control interface 710 to the display.

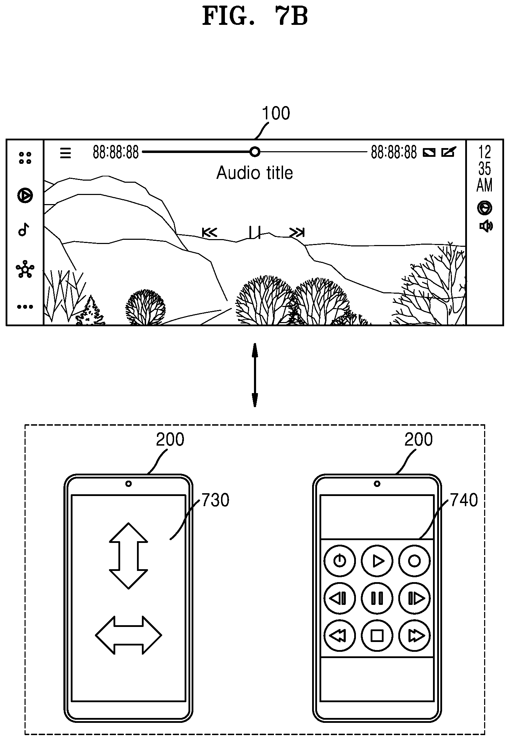

Referring to FIG. 7B, the vehicular electronic device 100 according to an embodiment of the disclosure may execute the audio player function and output the audio player screen to the display. The context information transmitted to the mobile device 200 when the vehicular electronic device 100 executes the audio player function has been described with reference to FIG. 7A, and thus the same description is omitted.

The mobile device 200 according to an embodiment of the disclosure may generate an audio control interface, based on the received context information, and output the audio control interface to the display. In this regard, the mobile device 200 may output one of a plurality of audio control interfaces, based on the driving state information of the vehicle. For example, when the driving state information of the vehicle indicates that the vehicle is moving at a high speed, the mobile device 200 may provide the audio control interface as a motion input interface through which inputs are received via motions. The motion input interface detect a hand moving left and right or up and down. For example, leftwards and rightwards movements of the hand may correspond to play previous song or play next song commands, and upwards and downwards motions may correspond to increases and decreases in playback volume. However, the disclosure is not limited thereto. Also, when providing the motion input interface, the mobile device 200 may output a motion guide screen 730 regarding the motion and guide the user with a motion corresponding to a specific function. Alternatively, when the driving state information of the vehicle indicates that the vehicle is moving at a high speed, the mobile device 200 may provide the audio control interface as a speech input interface through which a speech inputs are received.

Meanwhile, when the driving state information of the vehicle indicates that the vehicle is stopped, the mobile device 200 may output a touch input interface 740 in which the audio control functions are implemented as touch keys (buttons) to the display.

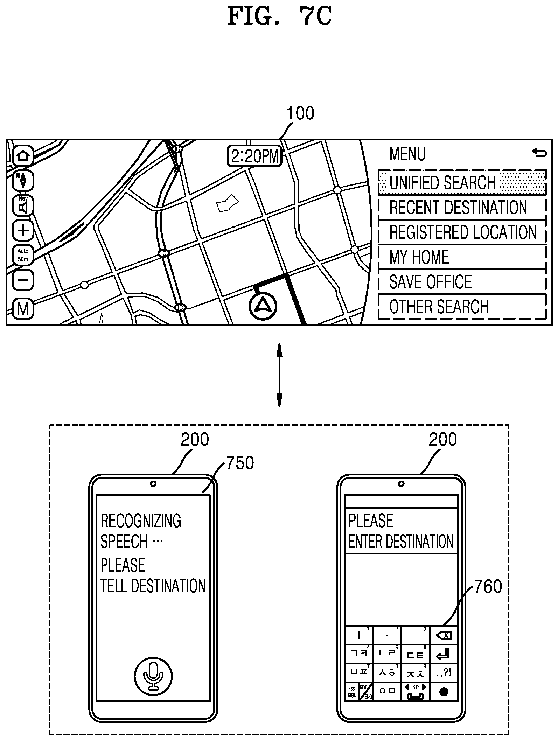

Referring to FIG. 7C, the vehicular electronic device 100 according to an embodiment of the disclosure may execute a navigation function, and output a navigation screen to the display. Also, the vehicular electronic device 100 may be executing a function of setting a destination among navigation functions.

The vehicular electronic device 100 may transmit information that the function being executed is the function of setting the destination among navigation functions, to the mobile device 200 as the context information.

The mobile device 200 according to an embodiment of the disclosure may generate a control interface through which the destination may be input, based on the received context information. In this regard, the mobile device 200 may determine an input method of the control interface through which the destination may be input, based on the driving state information of the vehicle. For example, when the driving state information of the vehicle indicates that the vehicle is moving at a high speed, the mobile device 200 may provide the control interface using a speech input interface through which a speech is received. Also, when providing the speech input interface, the mobile device 200 may output a guide message 750 'Please tell me the destination' on a screen to prompt the user to input the destination by a speech. Accordingly, the mobile device 200 may receive the user's speech input and transmit input information (e.g., destination information parsed from the speech) corresponding to the received speech input to the vehicular electronic device 100.

Meanwhile, when the driving state information of the vehicle indicates that the vehicle is stopped, the mobile device 200 may provide a touch-based key pad input interface 760. Accordingly, the mobile device 200 may receive a touch input that touches a keypad, and transmit input information (e.g., destination information) corresponding to the received touch input to the vehicular electronic device 100.

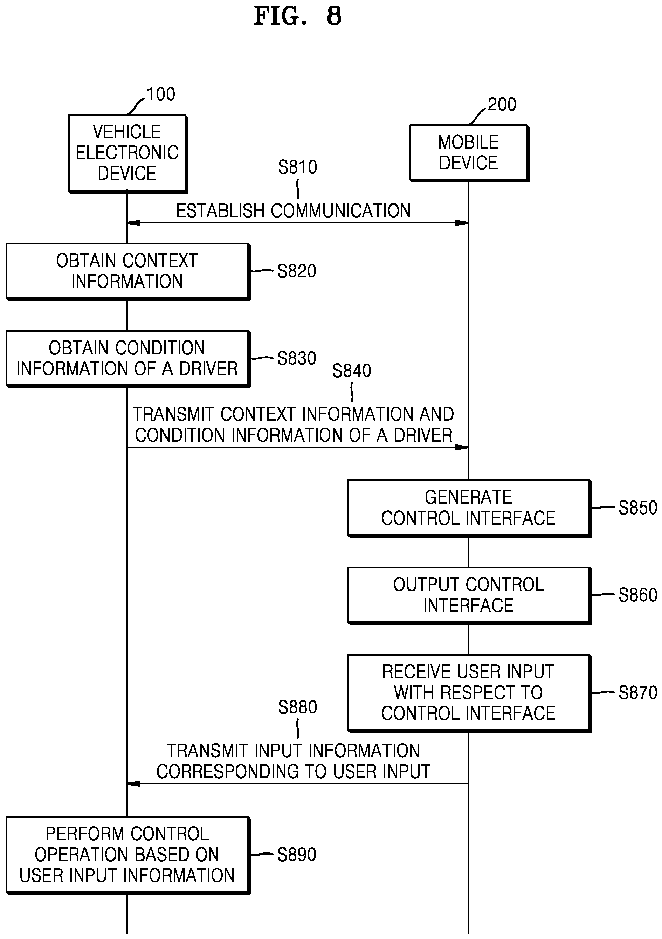

FIG. 8 is a flowchart illustrating a method of controlling the vehicular electronic device 100, by using the mobile device 200 according to an embodiment of the disclosure.

Referring to FIG. 8, the vehicular electronic device 100 and the mobile device 200 according to an embodiment of the disclosure may be communicatively connected to each other in operation S810. This has been described in detail with reference to FIG. 1, and thus a detailed description thereof is omitted.

The vehicular electronic device 100 according to an embodiment of the disclosure may obtain context information in operation S820, and obtain condition information of a driver in operation S830. Operation S820 of obtaining the context information has been described with reference to operation S220 of FIG. 2, and thus a detailed description thereof is omitted.

In addition, the condition information of the driver may include information about whether a state of the driver driving the vehicle on which the vehicular electronic device 100 is mounted or disposed is "normal" or "abnormal" (i.e., based on whether biometric indicators of the driver, as gleaned from sensors, cameras, etc. fall within threshold ranges preset as normal or abnormal) and a health condition (e.g., an increase in the heart rate, abnormal electrocardiogram (ECG), etc.) of the driver.

The vehicular electronic device 100 may obtain an image of the driver and gaze information of the driver from an internal camera disposed inside the vehicle. For example, the internal camera may capture the driver and obtain the image of the driver in real time. In addition, the internal camera may include a gaze tracking sensor that captures driver's pupils and detects movement of the pupils. Accordingly, the internal camera may transmit the image of the driver and the gaze information of the driver to the vehicular electronic device 100. The vehicular electronic device 100 may determine the condition of the driver such as whether the driver's gaze is dispersed based on the gaze information of the driver and whether the driver is dozing based on the image of the driver.

Also, the vehicular electronic device 100 may obtain information related to the driver's health from a wearable device worn by the driver. For example, the wearable device worn by the driver may measure a driver's heart rate, ECG, etc. Accordingly, the wearable device may transmit information such as the driver's heart rate and ECG to the vehicular electronic device 100, and the vehicular electronic device 100 may determine whether the health condition of the driver is abnormal, based on the received information.

The vehicular electronic device 100 may transmit context information of the vehicular electronic device 100 and the condition information of the driver to the mobile device 200 through a communication network in operation S840.

The mobile device 200 according to an embodiment of the disclosure may generate a control interface, based on the context information and the condition information of the driver received from the vehicular electronic device 100 in operation S850.

For example, the mobile device 200 may generate an audio control interface, based on the received context information. Also, the mobile device 200 may select any one of a plurality of audio control interfaces, based on the received condition information of the driver. For example, when the condition information of the driver indicates a normal state, the mobile device 200 may select a first audio control interface including control functions such as play/pause, play previous song, play next song, on/off, volume control, etc. Also, when the condition information of the driver indicates a caution or dangerous condition, the mobile device 200 may select a second audio control interface including some of the audio control functions included in the first audio control interface. However, the disclosure is not limited thereto.

The mobile device 200 according to an embodiment of the disclosure may output the generated control interface to a display in operation S860.

Also, when the condition information of the driver indicates the caution or dangerous condition, the mobile device 200 may output a warning sound or vibration or output a warning message together with the second audio control interface. Accordingly, the mobile device 200 may notify a user of a caution or dangerous situation.

The mobile device 200 may receive a user input for controlling the vehicular electronic device 100 through the control interface output to the display in operation S870, and transmit input information corresponding to the received user input to the vehicular electronic device 100.

The vehicular electronic device 100 may perform a control operation, based on the input information received from the mobile device 200 in operation S890.

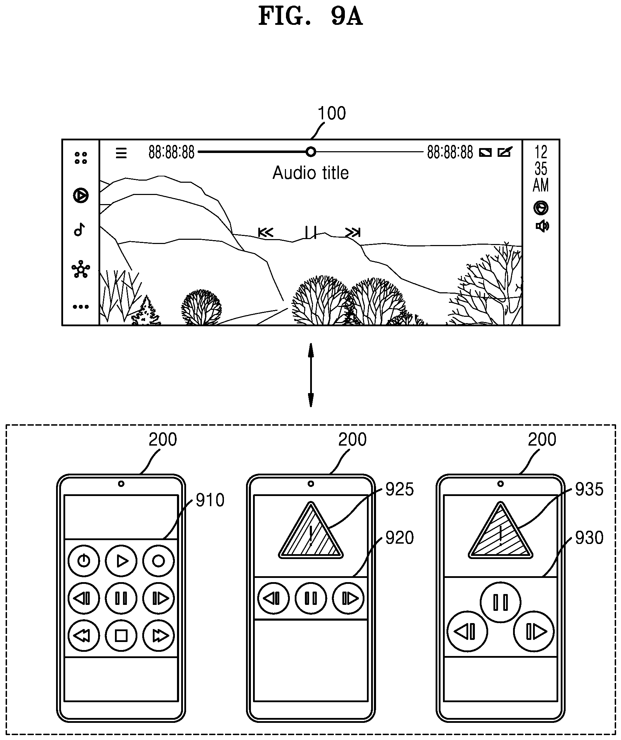

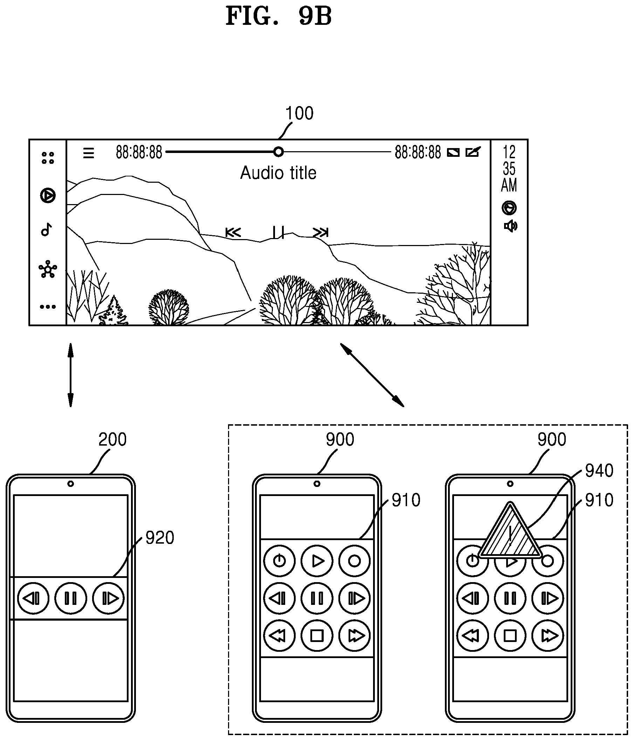

FIGS. 9A and 9B are reference diagrams illustrating a method, performed by the mobile device 200 according to an embodiment of the disclosure, of determining a control interface, based on context information of the vehicular electronic device 100 and condition information of a driver.

Referring to FIG. 9A, the vehicular electronic device 100 according to an embodiment of the disclosure may execute an audio player function. The vehicular electronic device 100 may output the audio player screen to a display. The audio player screen may include information about a currently playing media file (e.g., title, artist, genre, etc.) and objects representing selectable control functions (e.g., play previous song, play next song, play/pause, volume control, etc.) available on the audio player screen.

The vehicular electronic device 100 may transmit information indicating that the executed function is the audio player function, and information about the control functions available on the current audio player screen, to the mobile device 200 as the context information. The mobile device 200 according to an embodiment of the disclosure may generate an audio control interface, based on the received context information, and output the audio control interface to the display. In this regard, the mobile device 200 may generate one of a plurality of audio control interfaces, based on the condition information of the driver. For example, when the condition information of the driver of the vehicle indicates a "normal" condition, the mobile device 200 may output a first audio control interface 910 including the control functions such as play/pause, play previous song, play next song, on/off, volume control, etc. to a display.

Meanwhile, when the condition information of the driver indicates a caution condition, the mobile device 200 may output a second audio control interface 920 including some (e.g., play/pause, play previous song, and play next song) of audio control functions included in the first audio control interface 910 to the display. Also, the mobile device 200 may output a warning sound, vibration, or warning message 925 corresponding to the caution condition.

Also, when the condition information of the driver indicates a dangerous condition, the mobile device 200 may output a third audio control interface 930 obtained by magnifying icons indicating the functions included in the second audio control interface 920 to the display. Also, the mobile device 200 may output a warning sound, vibration, or warning message 935 corresponding to the dangerous condition.

Referring to FIG. 9B, the vehicular electronic device 100 according to an embodiment of the disclosure may execute an audio player function and output an audio player screen to the display. Also, the electronic device 100 for a vehicle according to an embodiment of the disclosure may be communicatively connected to a plurality of mobile devices 200 and 900. For example, the first mobile device 200 may be a mobile device of a driver driving a vehicle, and the second mobile device 900 may be a mobile device of a passenger in the vehicle.

The mobile devices 200 and 900 according to an embodiment of the disclosure may generate an audio control interface based on the received context information and output the audio control interface to the display. In this regard, when the vehicle is driving, the mobile device (the first mobile device 200) of the driver driving the vehicle may output the second audio control interface 920 including some (e.g., play/pause, play previous song, and play next song) of the audio control functions to the display.

Meanwhile, the mobile device (the second mobile device 900) of the passenger may output the first audio control interface 910 including the control functions such as play/pause, play previous song, play next song, on/off, volume control, etc. to the display.

Also, the second mobile device 900 according to an embodiment of the disclosure may receive the condition information of the driver from the vehicular electronic device 100, and when the condition information of the driver indicates the caution condition or the dangerous condition, the second mobile device 900 may output a warning sound, vibration, a warning message 940, etc. Accordingly, a passenger for example may be prompted that the driver's condition is abnormal, and take action to avoid an accident.

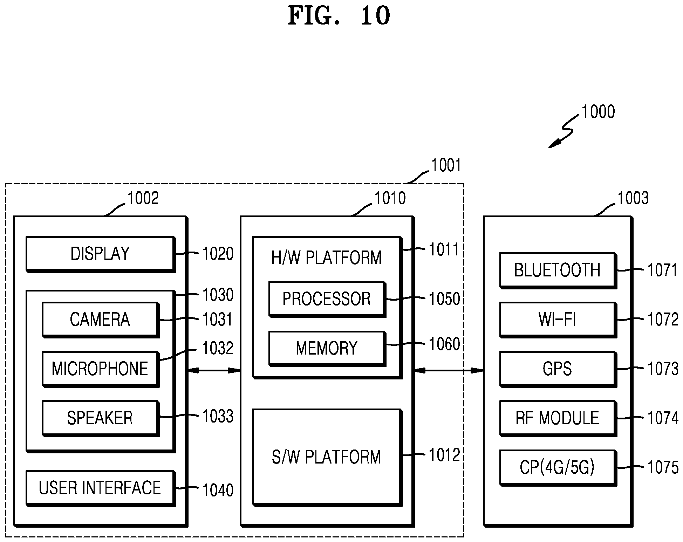

FIG. 10 is a block diagram of a configuration of a vehicular electronic device 1000 according to another embodiment of the disclosure.

The vehicular electronic device 1000 of FIG. 10 may be an embodiment of the disclosure of the vehicular electronic device 100 described with reference to FIG. 1.

Referring to FIG. 10, the vehicular electronic device 1000 may include a processor 1010, an inputter/outputter 1002 (i.e., input/output circuitry)(, and a communicator 1003. Here, the processor 101 and the inputter/outputter 1002 may be collectively referred to as an IVI head unit 1001. In addition, the vehicular electronic device 1000 may be disposed between a center front portion of a driver seat and a passenger seat in the vehicle.

The communicator 1003 may also be referred to as a transmission control unit (TCU).

In this case, a TCU is a component controlling transmission and reception of data in the vehicle and may be responsible for communication between the vehicle and an external electronic device (e.g., a server, a mobile device, etc.)

Furthermore, the processor 1010 may include components 1011 for implementing a hardware platform (e.g., an application processor or "AP," a memory, etc.) and components 1012 for implementing a software platform (an OS program, automotive safety software, an application, etc.)

Specifically, the components 1011 implementing the hardware platform may include at least one AP 1050 and a memory 1060. Here, the memory 1060 is the same as described with reference to FIG. 5. Also, in FIG. 10, the memory 1060 is included in the processor 1010. Also, the memory 1060 may not be included in the processor 1010 and may be included as a separate component included in the vehicular electronic device 1000.

Furthermore, the components 1011 implementing the hardware platform may further include a universal serial bus (USB) module (not shown), a frequency modulation (FM)/digital multimedia broadcasting (DMB) tuner (not shown), etc. In this regard, the USB module may include a USB insert (not shown) to read data from an inserted USB drive. Also, the FM/DMB tuner may selectively receive an FM/DMB broadcasting signal. Specifically, the FM/DMB tuner may tune and select a frequency of a channel to be received by the vehicular electronic device 1000 from among multiple radio wave components of a broadcasting signal received wirelessly via amplification, mixing, and resonance. The broadcasting signal received by the FM/DMB tuner may include audio, video, and additional information (e.g., an electronic program guide (EPG)).

The components 1012 implementing the software platform may include an OS program, automotive safety software, an application, etc. In this case, the OS program may include a QNX, Linux, or Android-based OS program.

The inputter/outputter 1002 is a component providing data to a user or receiving a user request, and may include at least one of a display 1020, a camera module 1030, or a user interface 1040. The display 1020 is a configuration corresponding to the display 140 of FIG. 5, and thus a detailed description thereof is omitted.

The camera module 1030 is a component for obtaining image and audio data, and may include a camera 1031 and a microphone 1032. The camera module 1030 may further include a speaker 1033 to output an operation sound of the camera 1031, etc. Further, the speaker 1033 is a separate component independent from the camera module 1030 and may perform an audio output operation. In addition, the camera module 1030 may operate as a detection sensor for recognizing a user's gesture and speech.

The camera 1031 may be implemented as an integral type to or a separate type from the vehicular electronic device 1000. The camera 1031 implemented as the separate type may be electrically connected to the processor 1010 of the vehicular electronic device 1000 through the communicator 1003 or the inputter/outputter 1002. For example, when the camera 1031 is implemented as the separate type from the vehicular electronic device 1000, the camera 1031 may be arranged in locations corresponding to a driver's face and upper body, to capture images corresponding to the driver's face and upper body. For example, the camera 1031 implemented as the separate type may obtain an image of the driver or gaze information of the driver to transmit the obtained image and gaze information to the vehicular electronic device 1000.

The microphone 1032 may receive a speech signal. The microphone 1032 may receive the voice input of the user, and the processor 1010 may recognize a control command corresponding to the voice input received by the microphone 1032 and control an operation corresponding to the control command to be performed.

The user interface 1040 may receive a user input for controlling the vehicular electronic device 1000. The user interface 1040 may include a push button, a wheel, a keyboard, a jog dial, a touch panel, and a haptic sensor, etc., for receiving the user input.

The communicator 1003 may include at least one of a Bluetooth module 1071, a Wi-Fi module 1072, a GPS module 1073, an RF module 1074, or a communication processor (CP) module 1075. Here, the CP module 1075 is a modem chipset and may communicate with an external electronic device through a communication network conforming to the 3G, 4G, or 5G communication standard. The communicator 1003 may further include at least one communication module (not shown) performing communication conforming to a communication standard such as BLE, NFC/RFID, Wi-Fi Direct, UWB, and/or ZIGBEE.

Further, components included in the vehicular electronic device 1000, e.g., the processor 1010, the inputter/outputter 1002, and the communicator 1003, may communicate with one other through a vehicle network. In addition, the vehicular electronic device 1000 may communicate with other components in a vehicle (not shown) through the vehicle network. In this regard, the vehicle network may be a network conforming to a CAN and/or a media oriented systems transport (MOST).

Meanwhile, the block diagrams of the vehicular electronic devices 100 and 1000 illustrated in FIGS. 5 and 10 are block diagrams for an embodiment of the disclosure. Each component of the block diagram may be integrated, added, or omitted according to the specifications of the vehicular electronic devices 100 and 1000 that are actually implemented. That is, two or more components may be combined into one component, or one component may be subdivided into two or more components as needed. In addition, the function performed in each block is for describing the embodiments of the disclosure, and the specific operation or device does not limit the disclosure.

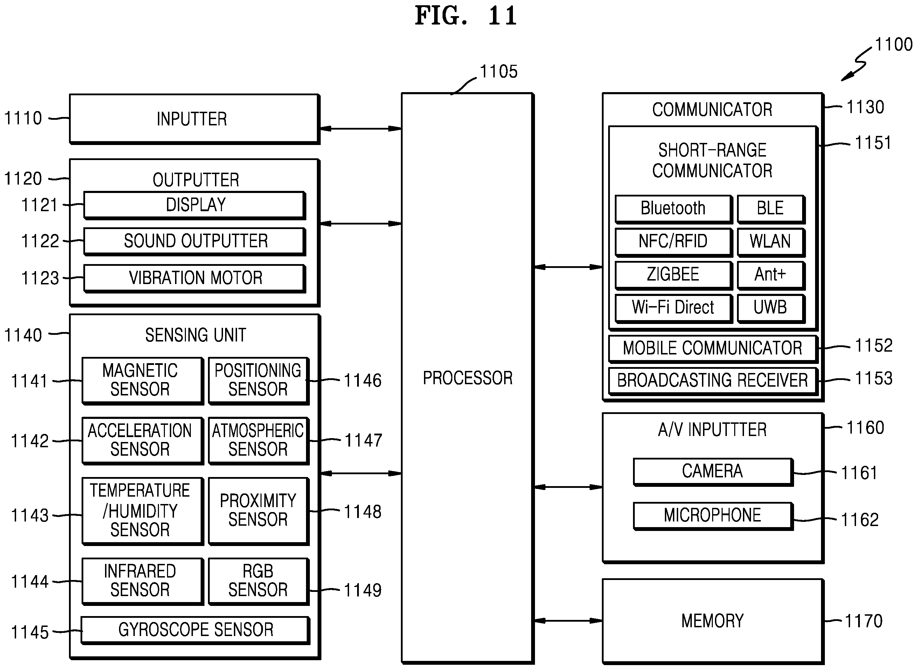

FIG. 11 is a block diagram illustrating a configuration of a mobile device 1100 according to another embodiment of the disclosure. The mobile device 1100 of FIG. 11 may be an embodiment of the disclosure of the mobile device 200 of FIG. 1.

Referring to FIG. 11, the mobile device 1100 according to an embodiment of the disclosure may further include a user inputter 1110 (e.g., input circuitry), an outputter 1120 (e.g., output circuitry), a sensing unit 1140, a processor 1105, a communicator 1130, an audio/video (A/V) inputter 1160, or a memory 1170.

Here, the communicator 1130, the processor 1105, the memory 1170, a display 1121, and the user inputter 1110 respectively correspond to the communicator 210, the processor 220, the memory 230, the display 240, and the user inputter 250 of FIG. 6, and thus the same descriptions thereof are omitted.

The sensing unit 1140 may include a sensor that senses a state of the mobile device 1100 or a state around the mobile device 1100. Also, the sensing unit 1140 may transmit information sensed by the sensor to the processor 1105. Also, the sensing unit 1140 may include at least one of a magnetic sensor 1141, an acceleration sensor 1142, a temperature/humidity sensor 1143, an infrared sensor 1144, a positioning sensor 1146, an atmospheric sensor 1147, a proximity sensor 1148, an RGB sensor 1149, or a gyroscope sensor 1145, but is not limited thereto. A function of each sensor may be intuitively inferred by one of ordinary skill in the art based on a name of the sensor, and thus, a detailed description thereof is omitted.

The A/V inputter 1160 is for inputting an audio signal or a video signal and may include a camera 1161 and a microphone 1162. The camera 1161 may obtain an image frame, such as a still image or a video, through an image sensor in a video call mode or a capturing mode. An image captured through the image sensor may be processed by the processor 1105 or a separate image processor (not shown).

The image frame processed by the camera 1161 may be stored in the memory 1170 or transmitted to the outside through the communicator 1130. The camera 1161 may include two or more cameras according to a structure of the mobile device 1100.

The microphone 1162 may receive an external sound signal and process the sound signal into electrical speech data. For example, the microphone 1162 may receive the sound signal from an external device or a speaker. The microphone 1162 may use various noise removal algorithms for removing noise occurring when the external sound signal is input.

The outputter 1120 is for outputting an audio signal, a video signal, or a vibration signal and may include a display 1121, a sound outputter 1122, a vibration motor 1123, etc.

The sound outputter 1122 may output audio data received from the communicator 1130 or stored in the memory 1170. Also, the sound outputter 1122 may output a sound signal related to functions (e.g., a call signal reception sound, a message reception sound, and a notification sound) performed in the mobile device 1100. Also, the sound outputter 1122 may include a speaker, a buzzer, etc.

The communicator 1130 may include a short-range communicator 1151 configured to utilize one or more of a plurality of short-range communication standards. The communicator 1130 may further include a mobile communicator 1152 for mobile-type communications (e.g., cellular) and a broadcasting receiver 1153 for receiving broadcast transmissions.

The vibration motor 1123 (e.g., a haptic motor) may output a vibration signal. For example, the vibration motor 1123 may output the vibration signal corresponding to an output of the audio data or the video data (e.g., a call signal reception sound, a message reception sound, etc.) Also, the vibration motor 1123 may output the vibration signal when a touch is input in the touch screen.

Meanwhile, the block diagrams of the mobile devices 200 and 1100 illustrated in FIGS. 6 and 11 are block diagrams for an embodiment of the disclosure. Each component of the block diagram may be integrated, added, or omitted according to the specifications of the mobile devices 200 and 1100 that are actually implemented. That is, two or more components may be combined into one component, or one component may be subdivided into two or more components as needed. In addition, the function performed in each block is for describing the embodiments of the disclosure, and the specific operation or device does not limit the disclosure.

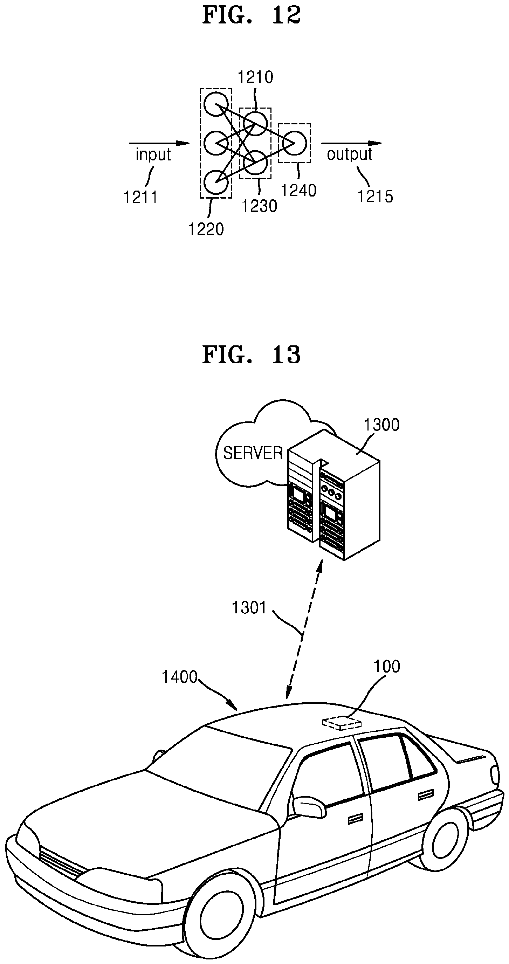

Meanwhile, at least one of the operations performed by the processors 120 and 1010 of the vehicular electronic devices 100 and 1000 and the operations performed by the processors 220 and 1105 of the mobile devices 200 and 1100 according to an embodiment of the disclosure may be performed using artificial intelligence (AI) technology. At least one operation performed using the AI technology is described in detail below with reference to FIG. 12.

FIG. 12 is a diagram illustrating an operation performed using an AI technology, according to an embodiment of the disclosure.

Specifically, at least one of i) obtaining context information, ii) obtaining driving state information of a vehicle, iii) obtaining condition information of a driver, or iv) performing a control operation based on input information received from the mobile devices 200 and 1100 may be performed by the processors 120 and 1010 of the vehicular electronic devices 100 and 1000 using the AI technology that performs computations through a neural network.

Also, at least one of i) generating a control interface based on the context information received from the vehicular electronic devices 100 and 1000, ii) generating a control interface based on the context information and driving state information of the vehicle received from the vehicular electronic devices 100 and 1000, iii) generating a control interface based on the context information and condition information of the driver received from the vehicular electronic devices 100 and 1000, or iv) generating a control interface based on the context information, the driving state information of the vehicle, and condition information of the driver received from the vehicular electronic devices 100 and 1000 may be performed by the processors 220 and 1105 of the mobile devices 200 and 1100 using the AI technology that performs computations through the neural network.

The AI technology may obtain a targeted result by performing processing such as analysis and/or classification, etc., with respect to input data based on operations through the neural network.

The AI technology may be implemented by using an algorithm. Herein, an algorithm for implementing the AI technology or a set of algorithms may be referred to as the neural network. Here, the neural network may receive input data and perform the above-described operations for analysis and/or classification, thereby outputting result data. In order for the neural network to accurately output the result data corresponding to the input data, the neural network needs to be trained. Herein, 'training' may mean training the neural network to self-discover or learn a method of analyzing a plurality of input data with respect to the neural network, a method of classifying the plurality of pieces of input data, and/or a method of extracting features utilized for generation of result data from the plurality of input data. More specifically, through a training process, the neural network may optimize weight values in the neural network by training data (e.g., a plurality of different images). The neural network may output a targeted result by self-learning the input data through the neural network having the optimized weight values.

When there are a plurality of hidden layers which are internal layers that perform operations, that is, when the depth of the neural network that performs operations increases, the neural network may be classified as a deep neural network. Examples of the AI neural network may include a CNN, a deep neural network (DNN), an RNN, a restricted Boltzmann machine (RBM), a deep belief network (DBN), a bidirectional recurrent deep neural network (BRDNN), and a deep Q-network, but are not limited thereto. The neural network may be segmented. For example, the CNN may be segmented into a deep convolution neural network (DCNN), a "capsnet" neural network (not shown), etc.

In the embodiment of the disclosure, the 'Al model' may mean a neural network including at least one layer operating to receive input data and output a targeted result. Also, the 'Al model' may mean an algorithm or a set of a plurality of algorithms that performs operations through the neural network and outputs a targeted result, a processor executing the algorithm or the set of the plurality of algorithms, software executing the algorithm or the set of the plurality of algorithms, or hardware executing the algorithm or the set of the plurality of algorithms.

Referring to FIG. 12, a neural network 1210 may be trained by receiving an input of training data. The trained neural network 1210 may receive input data 1211 through an input terminal 1220, and an output terminal 1240 may perform an operation outputting output data 1215 that is the target data by analyzing the input data 1211. The operation through the neural network 1210 may be performed by a hidden layer 1230. FIG. 12 briefly illustrates one hidden layer 1230 for convenience, but a plurality of hidden layers 1230 may be formed.

Specifically, in the embodiment of the disclosure, the neural network 1210 may be trained to obtain context information of the vehicular electronic devices 100 and 1000, based on information about functions being executed in the vehicular electronic devices 100 and 1000, screen information being output to the vehicular electronic devices 100 and 1000, etc. Also, in the embodiment of the disclosure, the neural network 1210 may be trained to obtain driving state information of the vehicle based on information related to driving of the vehicle. In addition, in the embodiment of the disclosure, the neural network 1210 may be trained to obtain condition information of the driver, based on an image of the driver, gaze information of the driver, information related to the driver's health, etc.

In the embodiment of the disclosure, the neural network 1210 may be trained to determine a corresponding control operation, based on user input information received from the mobile devices 200 and 1100.

In the embodiment of the disclosure, the neural network 1210 that performs the at least one of i) obtaining context information, ii) obtaining driving state information of a vehicle, iii) obtaining condition information of a driver, or iv) performing a control operation based on input information received from the mobile devices 200 and 1100 described above may be implemented within the processors 120 and 1010 of the vehicular electronic devices 100 and 1000. Alternatively, the neural network 1210 that performs the at least one of i) obtaining context information, ii) obtaining driving state information of a vehicle, iii) obtaining condition information of a driver, or iv) performing a control operation based on input information received from the mobile devices 200 and 1100 may be separated from the vehicular electronic devices 100 and 1000, and may be implemented within a separate electronic device (not shown) located in the vehicle or a processor (not shown).

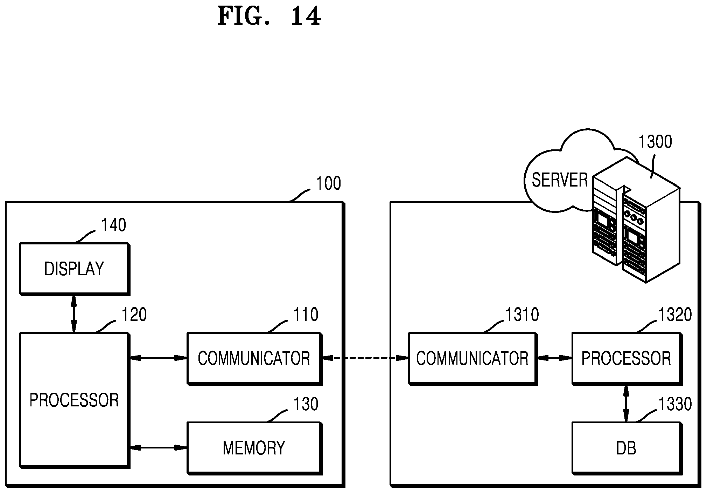

The operations using the neural network 1210 described above may be performed by a server (not shown) capable of communicating with the vehicular electronic devices 100 and 1000 according to an embodiment of the disclosure through a wireless communication network. Communication between the electronic devices 100 and 1000 and the server (not shown) will be described with reference to FIGS. 13 and 14.

Also, in the embodiment of the disclosure, the neural network 1210 may be trained to generate a control interface, based on the context information received from the vehicular electronic devices 100 and 1000. Also, in the embodiment of the disclosure, the neural network 1210 may be trained to generate a control interface, based on the context information and the driving state information of the vehicle received from the vehicular electronic devices 100 and 1000. Also, in the embodiment of the disclosure, the neural network 1210 may be trained to generate a control interface, based on the context information and condition information of the driver received from the vehicular electronic devices 100 and 1000. Also, in the embodiment of the disclosure, the neural network 1210 may be trained to generate a control interface, based on the context information, the driving state information of the vehicle, and the condition information of the driver received from the vehicular electronic devices 100 and 1000.

In the embodiment of the disclosure, the neural network 1210 that performs the at least one of i) generating a control interface based on the context information received from the vehicular electronic devices 100 and 1000, ii) generating a control interface based on the context information and driving state information of the vehicle received from the vehicular electronic devices 100 and 1000, iii) generating a control interface based on the context information and condition information of the driver received from the vehicular electronic devices 100 and 1000, or iv) generating a control interface based on the context information, the driving state information of the vehicle, and condition information of the driver received from the vehicular electronic devices 100 and 1000 described above may be implemented within the processors 220 and 1105 of the mobile devices 200 and 1100. Alternatively, the neural network 1210 that performs the at least one of i) generating a control interface based on the context information received from the vehicular electronic devices 100 and 1000, ii) generating a control interface based on the context information and driving state information of the vehicle received from the vehicular electronic devices 100 and 1000, iii) generating a control interface based on the context information and condition information of the driver received from the vehicular electronic devices 100 and 1000, or iv) generating a control interface based on the context information, the driving state information of the vehicle, and condition information of the driver received from the vehicular electronic devices 100 and 1000 described above may be implemented within a separate electronic device (not shown) from the mobile devices 200 and 1100 or a processor (not shown).

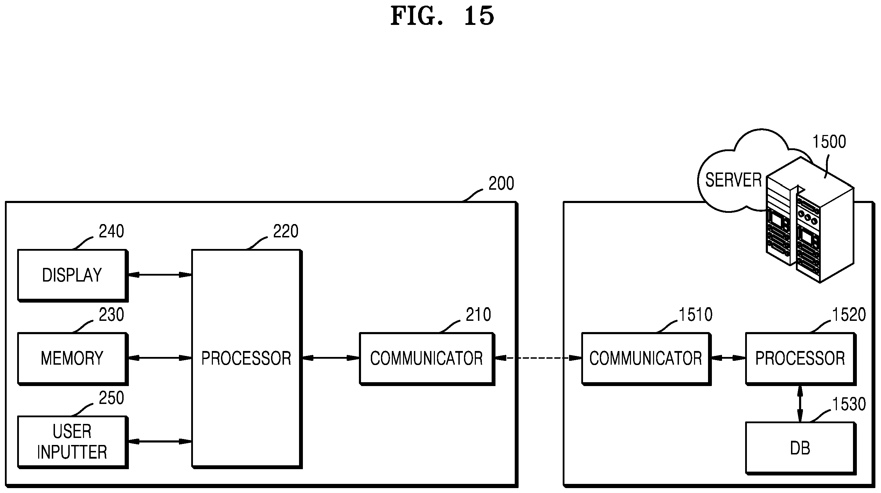

The operations using the neural network 1210 described above may be performed by a server (not shown) capable of communicating with the mobile devices 200 and 1100 according to an embodiment of the disclosure through a wireless communication network. Communication between the mobile devices 200 and 1100 and the server (not shown) will be described with reference to FIG. 15.

FIG. 13 is a diagram illustrating vehicular electronic devices 100 and 1000 according to an embodiment of the disclosure operating with a server 1300.

The server 1300 may include a server, a server system, a server-based device, etc. that transmit and receive data to and from the vehicular electronic devices 100 and 1000 through a communication network 1301 to process the data.

In the embodiment of the disclosure, the server 1300 may include a communicator communicating with the vehicular electronic devices 100 and 1000 installed inside a vehicle 1400, and a processor executing at least one instruction.

The server 1300 may receive information about functions being executed in the vehicular electronic devices 100 and 1000, screen information being output to the vehicular electronic devices 100 and 1000, etc. Also, the server 1300 may receive information related to driving of the vehicle 1400 from a vehicle sensor module. In addition, the server 1300 may receive an image of a driver, gaze information of the driver, information related to driver's health, etc.

The server 1300 may train an AI model and store the trained AI model. The server 1300 may perform at least one of i) obtaining context information, ii) obtaining driving state information of the vehicle 1400, or iii) obtaining condition information of the driver, using the trained AI model and the received information.

Also, the server 1300 may control the communicator to transmit at least one of the obtained context information, driving state information of the vehicle 1400, or condition information of the driver to the vehicular electronic devices 100 and 1000.

Generally, the vehicular electronic devices 100 and 1000 may have limited memory storage capacity, operation processing speed, training data set collection ability, etc., when compared to the server 1300. Thus, operations utilizing storage of large-volume data and large-scale computations may be performed in the server 1300, and then data and/or AI model may be transmitted to the vehicular electronic devices 100 and 1000 through the communication network. Then, the vehicular electronic devices 100 and 1000 may receive and use the data and/or AI data through the server 1300 without a processor having a large-capacity memory and a fast-operating ability, thereby performing an operation rapidly and easily.

FIG. 14 is a diagram illustrating in detail FIG. 13.

The vehicular electronic device 100 of FIG. 14 is described and illustrated using the same case as the vehicular electronic device 100 described with reference to FIG. 5 as an example.

Referring to FIG. 14, the server 1300 may include a communicator 1310, a processor 1320, and a database 1330.

The communicator 1310 may include one or more components that enable communication with the vehicular electronic device 100. The communicator 1310 may include at least one communication module such as a short-range communication module, a wired communication module, a mobile communication module, a broadcasting reception module, etc. Here, the at least one communication module may mean a tuner that performs broadcasting reception or a communication module capable of performing data transmission/reception through a network conforming to communication standards such as Bluetooth, wireless local area network (WLAN), Wireless Fidelity (WiFi), Wireless Broadband (WiBro), World Interoperability for Microwave Access (WiMax), code divisional multiple access (CDMA), wideband CDMA (WCDMA), the Internet, 3G, 4G, 5G, and/or a communication scheme using millimeter waves (mmWave).

For example, the communicator 1310 may quickly transmit and receive large-volume data by performing communication using millimeter waves (mmWave). Specifically, the vehicle may quickly receive the large-volume data and thus quickly provide data (e.g., data utilized for autonomous driving, data utilized for a navigation service, etc.) utilized to increase operation safety of the vehicle, and user use content (e.g., movies, music, etc.), thereby increasing safety of the vehicle and/or user convenience.

The mobile communication module included in the communicator 1310 may communicate with another device (e.g., a server not shown) located at a long distance through the communication network conforming to the communication standards such as 3G, 4G, and/or 5G, etc. Here, the communication module communicating with the server (not shown) located at the long distance may be referred to as a 'long-range communication module'.

The processor 1320 may control an overall operation of the server 1300. For example, the processor 1320 may perform operations by executing at least one of at least one instruction or programs of the server 1300.

The database 1330 may include a memory (not shown) in which at least one of at least one instruction, program, or data utilized by the server 1300 in performing a certain operation may be stored. The database 1330 may store data utilized by the server 1300 in performing an operation according to a neural network.

In the embodiment of the disclosure, the server 1300 may store the neural network 1210 described with reference to FIG. 12. The neural network 1210 may be stored in at least one of the processor 1105 or the database 1330. The neural network 1210 included in the server 1300 may be a neural network on which training has been completed.

The server 1300 may transmit the neural network on which training has been completed to the communicator 110 of the vehicular electronic device 100 through the communicator 1310. Then, the vehicular electronic device 100 may obtain and store the neural network on which training has been completed and obtain targeted output data through the neural network.

FIG. 15 is a diagram illustrating the mobile device 200 according to an embodiment of the disclosure operating with a server 1500.

The mobile device 200 of FIG. 15 is described and illustrated using the same case as the mobile device 200 described with reference to FIG. 6 as an example.

The server 1500 may include a server, a server system, a server-based device, etc. that transmit and receive data to and from the mobile device 200 through a communication network to process the data.

In the embodiment of the disclosure, the server 1500 may include a communicator 1510, a processor 1520, and a database 1530.

The communicator 1510 may include one or more components that enable communication with the mobile device 200. A specific configuration of the communicator 1510 is the same as the configuration of the communicator 1310 of FIG. 14, and thus a detailed description thereof is omitted.

The communicator 1510 according to an embodiment of the disclosure may receive at least one of context information of a vehicular electronic device, driving state information of a vehicle, or condition information of a driver from the mobile device 200.

The processor 1520 may generally control operations of the server 1500. For example, the processor 1520 may perform operations by executing at least one of at least one instruction or programs of the server 1500.

The database 1530 may include a memory (not shown) in which at least one of at least one instruction, program, or data utilized by the server 1500 to perform a certain operation may be stored. The database 1530 may store data utilized by the server 1500 to perform an operation according to a neural network.

In the embodiment of the disclosure, the server 1500 may store the neural network 1210 described with reference to FIG. 12. The neural network 1210 may be stored in at least one of the processor 1520 or the database 1530. The neural network 1210 included in the server 1500 may be a neural network on which training has been completed.

The processor 1520 may generate a control interface, using an AI model including the neural network on which training has been completed and received information. Also, the processor 1520 may control the communicator 1510 to transmit information about the generated control interface to the mobile device 200.

The server 1500 may transmit the neural network on which training has been completed to the communicator 210 of the mobile device 200 through the communicator 1510. Then, the mobile device 200 may obtain and store the neural network on which training has been completed and obtain targeted output data through the neural network.

Generally, the mobile device 200 may have limited memory storage capacity, operation processing speed, training data set collection ability, etc., when compared to the server 1500. Thus, operations utilizing storage of large-volume data and large-scale computations may be performed in the server 1500, and then necessary data and/or AI model may be transmitted to the mobile device 200 through the communication network. Then, the mobile device 200 may receive and use the data and/or AI data through the server 1500 without a processor having a large-capacity memory and a fast-operating ability, thereby performing an operation rapidly and easily.

A method of controlling a vehicular electronic device using a mobile device, according to an embodiment of the disclosure may be implemented as program commands executable through various computer means and may be recorded on a computer-readable medium. The computer-readable recording medium may include program commands, data files, data structures, and the like separately or in combinations. The program commands recorded on the computer-readable recording medium may be specially designed and configured for the disclosure or may be well-known to and be usable by one of ordinary skill in the art of computer software. Examples of the computer-readable recording medium include a magnetic medium such as a hard disk, a floppy disk, or a magnetic tape, an optical medium such as a compact disc read-only memory (CD-ROM) or a digital versatile disc (DVD), a magneto-optical medium such as a floptical disk, and a hardware device specially configured to store and execute program commands such as a ROM, a RAM, or a flash memory. Examples of the program commands include advanced language codes that may be executed by a computer by using an interpreter or the like as well as machine language codes that are made by a compiler.

Also, an operating method of an electronic device according to disclosed embodiments of the disclosure may be provided in a computer program product. The computer program product is a product purchasable between a seller and a purchaser.

The computer program product may include a S/W program, and a computer-readable storage medium in which the S/W program is stored. For example, the computer program product may include a software program-type product (e.g., a downloadable application) electronically distributed through a manufacturer of a broadcast receiver or an electronic market (e.g., Google Play^{™} store or App Store). For electronic distribution, at least a portion of the software program may be stored in a storage medium or temporarily generated. In this case, the storage medium may be a server of the manufacturer, a server of the electronic market, or a storage medium of a relay server that temporarily stores the software program.

The computer program product may include a storage medium of a server or a storage medium of a client device in a system including the server and the client device. Alternatively, when there is a third device (e.g., a smartphone) communicating with the server or the client device, the computer program product may include a storage medium of the third device. Alternatively, the computer program product may include a software program itself transmitted from the server to the client device or the third device or from the third device to the client device.

In this case, one of the server, the client device, and the third device may execute a method according to disclosed embodiments of the disclosure by executing the computer program product. Alternatively, at least two of the server, the client device, and the third device may execute a method according to disclosed embodiments of the disclosure in a distributed fashion by executing the computer program product.

For example, the server (e.g., a cloud server or an AI server) may execute the computer program product stored in the server, and may control the client device communicating with the server to perform a method according to disclosed embodiments of the disclosure.

Although the embodiments of the disclosure have been described in detail above, the coverage of the disclosure is not limited thereto, and various modifications and improvements made by one of ordinary skill in the art by using the basic concept of the disclosure defined by the claims are also within the coverage of the disclosure.

## Claims

1. A mobile device for controlling a vehicular electronic device, the mobile device comprising:
a communicator configured to communicate with the vehicular electronic device;
a display;
a memory storing one or more instructions; and
a processor,
wherein the one or more instructions are executable by the processor to cause the mobile device to:
control the communicator to receive context information of the vehicular electronic device, and driving state information of a vehicle from the vehicular electronic device,
generate a control interface for controlling the vehicular electronic device, based on the received context information and the received driving state information, and
control the display to output the control interface.

2. The mobile device of claim 1, wherein the context information of the vehicular electronic device includes at least one of:
information on a function executed in the vehicular electronic device, or information on a control function available within the executed function,
wherein the driving state information of the vehicle includes at least one of information indicating whether the vehicle is in motion, or a present speed of the vehicle.

3. The mobile device of claim 2, wherein one or more instructions are executable by the processor to:
based on the received context information, select one or more control functions for which inputs are receivable, and
wherein at least some of the selected one or more control functions are included in the generated control interface.

4. The mobile device of claim 2, wherein controlling the display to output the control interface further comprises:
generating a first control interface when the vehicle is stopped, and generating a second control interface when the vehicle is in motion,
wherein a count of control functions included in the second control interface is less than a count of control functions included in the first control interface.

5. The mobile device of claim 1, further comprising input/output circuitry configured to receive a user input with respect to the control interface as input information,
wherein the input information is transmitted to the vehicular electronic device through the communicator.

6. The mobile device of claim 1, wherein the one or more instructions are executable by the processor to:
receive condition information on a driver operating the vehicle from the vehicular electronic device,
wherein the control interface is generated based at least in part on the received condition information of the driver.

7. The mobile device of claim 6, wherein generating the control interface based at least in part on the received condition information further includes:
generating a first control interface when the condition information indicates a normal condition, and
generating a second control interface when the condition information indicates an abnormal condition,
wherein a count of control functions included in the second control interface is less than a count of control functions included in the first control interface.

8. The mobile device of claim 6, wherein the one or more instructions are executable by the processor to:
output at least one of a sound, a vibration, or a notification message, based on the received condition information of the driver.

9. A vehicular electronic device comprising:
a communicator configured to communicate with a mobile device;
a memory storing one or more instructions; and
a processor,
wherein the one or more instructions are executable by the processor to cause the vehicular electronic device to:
control the communicator to transmit context information related to a function executed in the vehicular electronic device, and driving state information of a vehicle to the mobile device,
receive a user input through a control interface as input information, the control interface generated by the mobile device based on the context information and the driving state information of the vehicle, and
execute a control operation based on the input information.

10. The vehicular electronic device of claim 9, further comprising a display,
wherein the one or more instructions are executable by the processor to: control the display to output an interface screen corresponding to the executed function, and
update the interface screen as the control operation is executed.

11. The vehicular electronic device of claim 9, wherein the one or more instructions are executable by the processor to:
receive information related to operation of the vehicle from a vehicle sensor of the vehicle, and
obtain driving state information of the vehicle, based on the information related to the operation of the vehicle.

12. The vehicular electronic device of claim 9, wherein the processor is further configured to execute the one or more instructions to:
obtain condition information of a driver operating the vehicle, and
control the communicator to transmit the condition information to the mobile device.

13. A method of controlling a vehicular electronic device using a mobile device, the method comprising:
receiving, via a communicator circuitry, context information of the vehicular electronic device and driving state information of a vehicle from the vehicular electronic device;
generating, by a processor, a control interface for controlling the vehicular electronic device, based on the received context information of the vehicular electronic device and the driving state information of the vehicle, and
outputting the generated control interface on a display.

14. The method of claim 13, wherein the context information of the vehicular electronic device includes at least one of:
information on a function executed within the vehicular electronic device, or information on a control function available within the executed function,
wherein the driving state information of the vehicle includes at least one of information indicating whether the vehicle is in motion, or a present speed of the vehicle.

15. The method of claim 14, wherein generating the control interface further includes:
based on the received context information, select one or more control functions for which inputs are receivable,
wherein at least some of the selected control functions are included in the generated control interface.
